# EUROPEAN PATENT SPECIFICATION

(11) **EP 2 827 241 B1**
(45) Date of publication and mention of the grant of the patent: **01.12.2021**
(21) Application number: 14176049.6
(22) Date of filing: 08.07.2014
(51) Int. Cl.: G06F 9/4401, G06F 13/24, G06F 13/40

(54) **ELECTRONIC DEVICE THAT EXECUTES HIBERNATION, SUSPEND CONTROL METHOD AND A NON-TRANSITORY COMPUTER-READABLE RECORDING MEDIUM**
ELEKTRONISCHE VORRICHTUNG, DIE EINEN RUHEZUSTAND AUSFÜRT, ANHALT-STEUERVERFAHREN UND EIN NICHTFLÜCHTIGES COMPUTERLESBARES AUFZEICHNUNGSMEDIUM
DISPOSITIF ÉLECTRONIQUE QUI EXÉCUTE UNE HIBERNATION

(30) Priority: 18.07.2013 JP 2013149738; 18.07.2013 JP 2013149739
(43) Date of publication of application: 21.01.2015
(73) Proprietor: Kyocera Document Solutions Inc., Chuo-ku Osaka 540-8585 (JP)
(72) Inventor: Okuda, Masaya, Osaka, 540-8585 (JP)
(74) Representative: Trinks, Ole

(56) References cited:
- US-A1- 2005 038 933
- "System and Method for a space optimized selective hibernation in a computer system", IP.COM JOURNAL, IP.COM INC., WEST HENRIETTA, NY, US, 17 December 2012 (2012-12-17), XP013155250, ISSN: 1533-0001

## Description

### FIELD

The present disclosure relates to an electronic device that executes hibernation, a suspend control method and a non-transitory computer-readable recording medium.

### BACKGROUND

In a typical hibernation technology, when an electronic device is shifted to a hibernation state, data within an entire area of a memory is saved to a non-volatile storage device as image data, and when the electronic device is returned from the hibernation state, the image data is read from the non-volatile storage device, to thereby restore the data within the memory.

Hibernation (or Suspend to disk) in computing is powering down a computer while retaining its state. Upon hibernation, the computer saves the contents of its random access memory (RAM) to a hard disk or other non-volatile storage. Upon resumption, the computer is exactly as it was before entering hibernation. When used to save power, hibernation is similar to sleep mode; however, it saves more power at the cost of slower resumption.

As used herein, the expression "end of suspend" or "end time of suspend" shall mean upon or after resumption of the electronic device.

A typical information processing device can perform entire area hibernation that saves the entire area of a main memory to a universal serial bus (USB) memory and partial saving hibernation that saves only an area of the main memory that needs to be saved.

In general, a memory area of an electronic device such as a printing apparatus can be classified roughly into two categories. One is an area (hereinafter referred to as "operating system (OS) memory area") into which a software program is deployed, and the other is an area (hereinafter referred to as "input/output (IO) memory area") into which temporary data such as temporary image processing data is deployed.

In the typical hibernation technology, the temporary data stored in the IO memory area can be saved to the non-volatile storage device as necessary.

A conventional hibernation process for a computer system is described in "System and Method for a space optimized selective hibernation in a computer system", IP.COM JOURNAL, IP.COM INC., West Henrietta, NY, US, published December 17, 2012.

### SUMMARY

The invention is defined by the appended claims 1 to 3.

### BRIEF DESCRIPTION OF THE DRAWINGS

All drawings are intended to illustrate some aspects and examples of the present disclosure. The drawings described are only schematic and are non-limiting, and are not necessarily drawn to scale.
- FIG. 1: illustrates a configuration of an electronic device according to a first example of the present disclosure.
- FIG. 2: illustrates an example of a memory map of a memory for a main CPU illustrated in FIG. 1.
- FIG. 3: illustrates steps of processing performed at a start time of suspend of the electronic device illustrated in FIG. 1.
- FIG. 4: illustrates a configuration of an electronic device according to a second embodiment of the present disclosure.
- FIG. 5: illustrates an example of a memory map of a memory for the main CPU illustrated in FIG. 4.
- FIG. 6: illustrates steps of processing performed at the start time of suspend of the electronic device illustrated in FIG. 4.

### DETAILED DESCRIPTION

Now, an example helpful to understand the invention and an embodiment of the present disclosure are described with reference to the accompanying drawings.

First, a first example of the present disclosure is described.

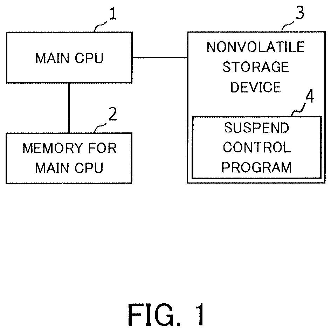

FIG. 1 illustrates a configuration of an electronic device according to the first example. The electronic device is, for example, an image forming apparatus that performs image processing and prints an image subjected to the image processing.

The electronic device illustrated in FIG. 1 includes a main central processing unit (CPU) 1, a memory 2 for a main CPU, and a non-volatile storage device 3.

The main CPU 1 is a main processor that performs specific processing such as the image processing. The memory 2 for the main CPU is a random access memory (RAM) used by the main CPU 1. The non-volatile storage device 3 is, for example, a flash memory, and stores a suspend control program 4 to store image data at a time of suspend.

At the time of suspend, power supply to the main CPU 1, the memory 2 for the main CPU, and the non-volatile storage device 3 is stopped.

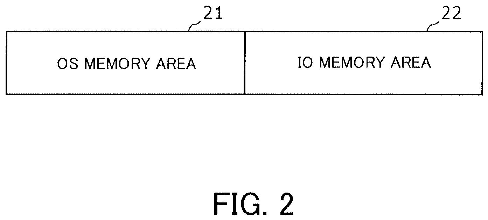

FIG. 2 illustrates an example of a memory map of the memory 2 for the main CPU illustrated in FIG. 1. The memory 2 for the main CPU includes an OS memory area 21 and an IO memory area 22. Software programs such as an operating system and an application and data used by the operating system are deployed into the OS memory area 21. Specific data is stored in the IO memory area 22. In other words, data used for processing executed by the main CPU 1 is stored in the IO memory area 22.

Identification data (for example, flag) indicating whether or not the specific data is stored in the IO memory area 22 is stored in the memory 2 for the main CPU.

Note that, the specific data is data that is temporarily used when the electronic device is operated, and may be data on a specific application or cache data. Specifically, the specific data is, for example, font cache data or dictionary data for optical character recognition (OCR).

Note that, the specific application may store the specific data in the IO memory area 22, or each kind of application may store a specific type of data (such as cache data) in the IO memory area 22.

Note that, based on a specific application program, when the specific data is stored in the IO memory area 22, the main CPU 1 sets the identification data thereon to a value indicating that the specific data is stored in the IO memory area 22, and when all pieces of the specific data are erased from the IO memory area 22, sets the identification data thereon to a value indicating that the specific data is not stored in the IO memory area 22.

At a start time of suspend, based on the suspend control program 4, the main CPU 1 (a) determines based on the value of the above-mentioned identification data whether or not the specific data is stored in the IO memory area 22 of the memory 2 for the main CPU, (b1) when the specific data is not stored in the IO memory area 22, generates image data (hereinafter referred to as "first piece of image data") on the OS memory area 21 and stores the image data in the non-volatile storage device 3, and (b2) when the specific data is stored in the IO memory area 22, generates image data (hereinafter referred to as "second piece of image data") on the OS memory area 21 and the IO memory area 22 and stores the image data in the non-volatile storage device 3.

Further, at an end time of suspend, based on the suspend control program 4, the main CPU 1 (c1) restores the software program and the like in the OS memory area 21 based on the first piece of image data when the first piece of image data is stored in the non-volatile storage device 3, and (c2) when the second piece of image data is stored in the non-volatile storage device 3, restores the software program and the like in the OS memory area 21 and restores the data within the IO memory area 22 based on the second piece of image data.

Next, a description is made of suspend operation of the above-mentioned electronic device.

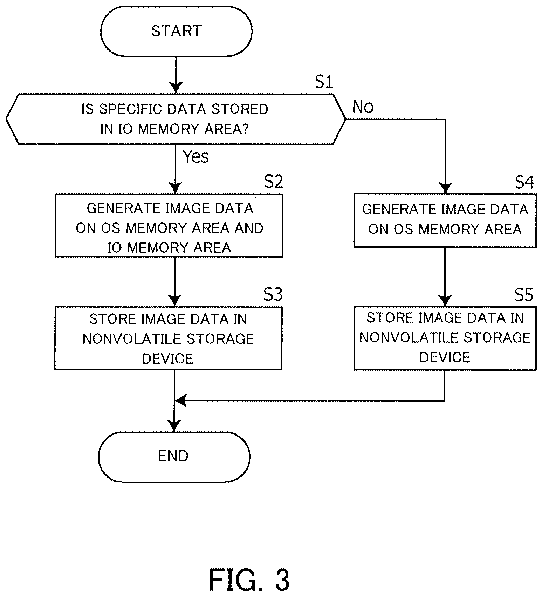

FIG. 3 illustrates steps of processing performed at the start time of suspend of the electronic device illustrated in FIG. 1.

At the start time of suspend, based on the suspend control program 4, the main CPU 1 determines based on the value of the above-mentioned identification data whether or not the specific data is stored in the IO memory area 22 of the memory 2 for the main CPU (Step S1).

When the specific data is stored in the IO memory area 22, based on the suspend control program 4, the main CPU 1 generates the image data (second piece of image data) including both the OS memory area 21 and the IO memory area 22 (Step S2), and stores the image data in the non-volatile storage device 3 (Step S3).

On the other hand, when the specific data is not stored in the IO memory area 22, based on the suspend control program 4, the main CPU 1 generates the image data (first piece of image data) on only the OS memory area 21 (Step S4), and stores the image data in the non-volatile storage device 3 (Step S5).

In this manner, at the start time of suspend, the saving of the program and the data stored in the memory 2 for the main CPU is executed, and the power supply to the main CPU 1, the memory 2 for the main CPU, and the non-volatile storage device 3 is stopped.

After that, when the power supply to the main CPU 1, the memory 2 for the main CPU, and the non-volatile storage device 3 is restarted, restoration processing is executed at the end time of suspend as follows.

When the first piece of image data is stored in the non-volatile storage device 3, based on the suspend control program 4, the main CPU 1 reads the first piece of image data from the non-volatile storage device 3, and restores the program and the like within the OS memory area 21 based on the first piece of image data.

When the second piece of image data is stored in the non-volatile storage device 3, based on the suspend control program 4, the main CPU 1 reads the second piece of image data from the non-volatile storage device 3, and restores the program and the like within the OS memory area 21 and the data within the IO memory area 22 based on the second piece of image data.

As described above, it is possible to appropriately save/restore temporary data to be saved/restored at the time of suspend without requiring a user's intention.

Note that, in the first example, setting items may be provided for a hibernation mode. A full hibernation that performs the saving/restoration of the data within both the OS memory area 21 and the IO memory area 22, a partial hibernation that performs the saving/restoration of the data within only the OS memory area 21, and an automatic selection mode that automatically selects any one of the full hibernation and the partial hibernation as described above can be set as the setting items, and the saving/restoration may be performed in the mode set in the setting item.

Next, a second embodiment of the present disclosure according to the present invention is described.

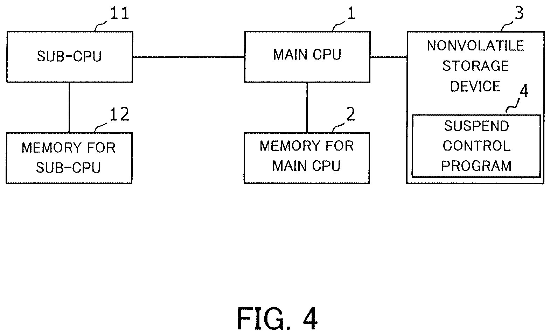

FIG. 4 illustrates a configuration of an electronic device according to the second embodiment. The electronic device is, for example, an image forming apparatus that performs image processing and prints an image subjected to the image processing.

The electronic device illustrated in FIG. 4 includes the main central processing unit (CPU) 1, the memory 2 for a main CPU, and the non-volatile storage device 3.

Note that, a sub-CPU 11 and a memory 12 for a sub-CPU may be a subsystem built into this electronic device, or may be an external system connected through a network or the like.

The main CPU 1 is a main processor that performs specific processing such as the image processing. The memory 2 for the main CPU is a random access memory (RAM) used by the main CPU 1. The non-volatile storage device 3 is, for example, a flash memory, and stores the suspend control program 4 to store image data at the time of suspend.

At the time of suspend, power supply to the main CPU 1, the memory 2 for the main CPU, and the non-volatile storage device 3 is stopped. Note that, even at the time of suspend, power is continuously supplied to the sub-CPU 11 and the memory 12 for the sub-CPU. The sub-CPU 11 is a processor other than the main CPU 1. The memory 12 for the sub-CPU is a RAM used by the sub-CPU 11.

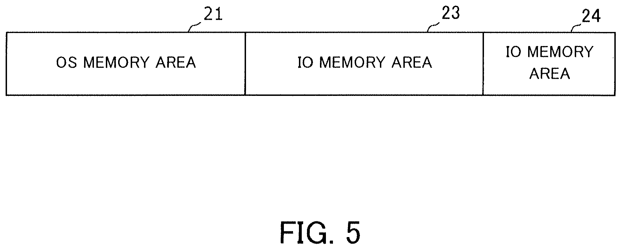

FIG. 5 illustrates an example of a memory map of the memory 2 for the main CPU illustrated in FIG. 4. The memory 2 for the main CPU includes the OS memory area 21, an IO memory area 23, and an IO memory area 24. The software programs of the operating system and the application and the data used by the operating system are deployed into the OS memory area 21. Data that does not need to be saved at the time of suspend is stored in the IO memory area 23. Data that needs to be saved at the time of suspend is stored in the IO memory area 24. In other words, specific data that needs to be saved at the time of suspend is stored in the IO memory area 24, and the other data is stored in the IO memory area 23 provided separately from the IO memory area 24.

The specific data is the data that is temporarily used when the electronic device is operated, and is, for example, font cache data or dictionary data for optical character recognition (OCR). Here, a part or all of the data that is temporarily used can be stored in the IO memory area 24 as the specific data based on a designer's setting.

Note that, the specific application may store the specific data in the IO memory area 24, or each kind of application may store a specific type of data (such as cache data) in the IO memory area 24.

At the start time of suspend, based on the suspend control program 4, the main CPU 1 (a) generates image data (hereinafter referred to as "first piece of image data") on the OS memory area 21 and stores image data in the non-volatile storage device 3, and (b) generates image data (hereinafter referred to as "third piece of image data") on the IO memory area 24, transfers the image data to the sub-CPU 11, and stores the image data in the memory 12 for the sub-CPU.

Further, at the end time of suspend, based on the suspend control program 4, the main CPU 1 (c) reads the first piece of image data from the non-volatile storage device 3, and restores the software program and the like in the OS memory area 21 based on the first piece of image data, and (d) transfers the third piece of image data stored in the memory 12 for the sub-CPU from the sub-CPU 11, and restores the specific data in the IO memory area 24 based on the third piece of image data.

Further, at the start time of suspend and at the end time of suspend, based on the suspend control program 4, the main CPU 1 identifies which of the full hibernation and the partial hibernation the hibernation mode is. When the hibernation mode is the partial hibernation, the main CPU 1 performs the saving/restoration of the data within only the OS memory area 21 and the IO memory area 24 in the above-mentioned manner. Note that, the hibernation mode is one of setting items, and is set by the user.

On the other hand, when the hibernation mode is the full hibernation, based on the suspend control program 4, the main CPU 1 generates image data (hereinafter referred to as "fourth piece of image data") on the IO memory area 23 and the OS memory area 21 and stores the image data in the non-volatile storage device 3 at the start time of suspend, and at the end time of suspend, reads the fourth piece of image data from the non-volatile storage device 3 and restores the software program and the like in the OS memory area 21 and the data within the IO memory area 23 based on the fourth piece of image data. Note that, even when the hibernation mode is the full hibernation, the same saving/restoration as when the hibernation mode is the partial hibernation is performed for the IO memory area 24.

Next, a description is made of suspend operation of the above-mentioned electronic device.

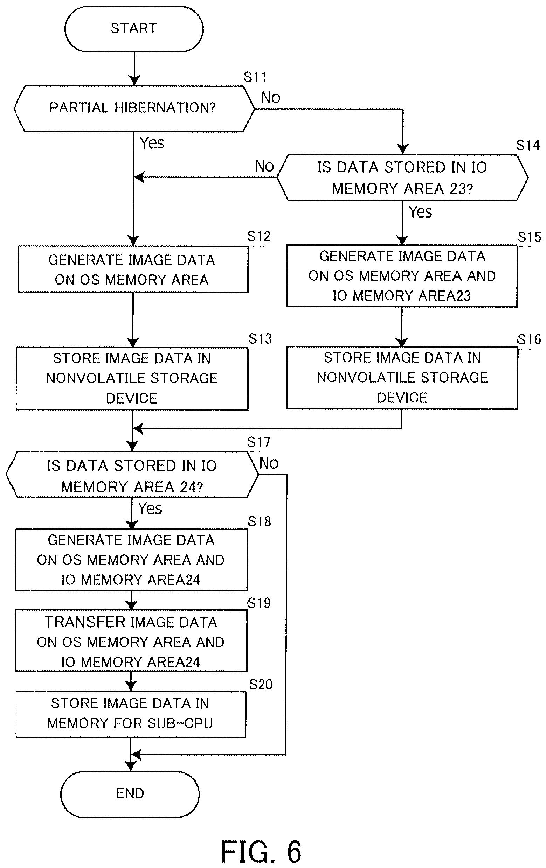

FIG. 6 illustrates steps of processing performed at the start time of suspend of the electronic device illustrated in FIG. 4.

At the start time of suspend, based on the suspend control program 4, the main CPU 1 determines which of the full hibernation and the partial hibernation the hibernation mode is (Step S11).

When the hibernation mode is the partial hibernation, the main CPU 1 generates the image data (first piece of image data) on the OS memory area 21 (Step S12) and stores the image data in the non-volatile storage device 3 (Step S13) in the above-mentioned manner.

On the other hand, when the hibernation mode is the full hibernation, based on the suspend control program 4, the main CPU 1 determines whether or not data is stored in the IO memory area 23 (Step S14), and when the data is stored in the IO memory area 23, generates the image data (fourth piece of image data) on the OS memory area 21 and the IO memory area 23 (Step S15) and stores the image data in the non-volatile storage device 3 (Step S6) in the above-mentioned manner.

Note that, when data is not stored in the IO memory area 23, the main CPU 1 generates the image data (first piece of image data) on the OS memory area 21 (Step S12) and stores the image data in the non-volatile storage device 3 (Step S13) in the above-mentioned manner.

Then, based on the suspend control program 4, the main CPU 1 determines whether or not data is stored in the IO memory area 24 (Step S17), and when data is stored in the IO memory area 24, generates the image data (third piece of image data) on the IO memory area 24 (Step S18), transfers the image data to the sub-CPU 11 (Step S19), and stores the image data in the memory 12 for the sub-CPU (Step S20).

In this manner, at the start time of suspend, the saving of the program and the data stored in the memory 2 for the main CPU is executed, and the power supply to the main CPU 1, the memory 2 for the main CPU, and the non-volatile storage device 3 is stopped.

After that, when the power supply to the main CPU 1, the memory 2 for the main CPU, and the non-volatile storage device 3 is restarted, the restoration processing is executed at the end time of suspend as follows.

When the first piece of image data is stored in the non-volatile storage device 3, based on the suspend control program 4, the main CPU 1 reads the first piece of image data from the non-volatile storage device 3, and restores the program and the like within the OS memory area 21 based on the first piece of image data.

When the fourth piece of image data is stored in the non-volatile storage device 3, based on the suspend control program 4, the main CPU 1 reads the fourth piece of image data from the non-volatile storage device 3, and restores the program and the like within the OS memory area 21 and the data within the IO memory area 23 based on the fourth piece of image data.

In addition, the main CPU 1 transfers the third piece of image data from the sub-CPU 11, and restores the data within the IO memory area 24 based on the third piece of image data.

With the above-mentioned configuration, the data within the IO memory area 24 is saved to another system (sub-CPU 11 and memory 12 for the sub-CPU), and hence even when the saving/restoration is performed for the IO memory area 24 along with the OS memory area 21, an influence on a time necessary for the restoration of the data within the OS memory area 21 can be suppressed to a small level.

The present disclosure can be applied to, for example, an image forming apparatus such as a printer or a multifunction peripheral.

## Claims

1. An electronic device, comprising:
- a first memory (2) including a plurality of memory areas (21, 23, 24);
- a main processor (1);
- a non-volatile storage device (3);
- a sub-processor (11) other than the main processor (1); and
- a second memory (12) connected to the sub-processor (11);
wherein the main processor (1) is configured to:
- identify which of a full hibernation and a partial hibernation a hibernation mode is; wherein:
when the hibernation mode is the partial hibernation, the main processor (1) is configured to:
- generate a first piece of image data on an OS memory area (21) of the first memory (2) in which a software program is stored; and
- store the generated first piece of image data to the non-volatile storage device (3), and
when the hibernation mode is the full hibernation, the main processor (1) is configured to:
- generate a fourth piece of image data on the OS memory area (21) and a second IO memory area (23) serving as an area of the first memory (2) other than a first IO memory area (24), when data that does not need to be saved is stored in the second IO memory area (23); and
- store and save the fourth piece of image data in and to the non-volatile storage device (3);
or
- generate the first piece of image data on an OS memory area (21) of the first memory (2), when data that does not need to be saved is not stored in the second IO memory area (23); and
- store and save the first piece of image data in and to the non-volatile storage device (3),
wherein the main processor (1) is then configured to:
- determine, whether or not specific data is stored in the first IO memory area (24) of the first memory (2), wherein the specific data includes data that is temporarily used, when the electronic device is operated, preferably font cache data or dictionary data for optical character recognition;
- generate a third piece of image data on the first IO memory area (24), when the specific data is stored in the first IO memory area (24), wherein the third piece of image data includes data that needs to be saved at the time of suspend;
- transfer the third piece of image data to the sub-processor (11) and store the third piece of image data in the second memory (12) for the sub-processor (11),
wherein at the end time of suspend of the electronic device, the main processor (1) is configured to:
- read the first piece of image data from the non-volatile storage device (3), and restore the software program in the OS memory area (21) based on the first piece of image data, when the hibernation mode has been the partial hibernation, or when the hibernation mode has been the full hibernation and data has not been stored in the second IO memory area (23), or read the fourth piece of image data from the non-volatile storage device (3), and restore the software program in the OS memory area (21) and data within the second IO memory area (23) based on the fourth piece of image data, when the hibernation mode has been the full hibernation and data has been stored in the second IO memory area (23);
- transfer the third piece of image data stored in the second memory (12) for the sub-processor (11) and restore the specific data in the first IO memory area (24) based on the third piece of image data,
wherein the end time of suspend of the electronic device is the time upon or after resumption of the electronic device.

2. A suspend control method, comprising the steps of:
- identifying which of a full hibernation and a partial hibernation a hibernation mode is; wherein:
when the hibernation mode is the partial hibernation:
- generating a first piece of image data on an OS memory area (21) of a first memory (2) used by a main processor (1) in which a software program is stored; and
- storing the generated first piece of image data to a non-volatile storage device (3), and
when the hibernation mode is the full hibernation:
- generating a fourth piece of image data on the OS memory area (21) and a second IO memory area (23) serving as an area of the first memory (2) other than a first IO memory area (24), when data that does not need to be saved is stored in the second IO memory area (23); and
- storing and saving the fourth piece of image data in and to the non-volatile storage device (3);
or
- generating the first piece of image data on an OS memory area (21) of the first memory (2), when data that does not need to be saved is not stored in the second IO memory area (23); and
- storing and saving the first piece of image data in and to the non-volatile storage device (3);
- determining, whether or not specific data is stored in the first IO memory area (24), via the main processor (1), wherein the specific data includes data that is temporarily used when an electronic device is operated, preferably font cache data or dictionary data for optical character recognition;
- generating a third piece of image data on the first IO memory area (24) via the main processor (1), when the specific data is stored in the first IO memory area (24), wherein the third piece of image data includes data that needs to be saved at the time of suspend;
- storing the generated first piece of image data to a non-volatile storage device (3),
- transferring the third piece of image data to a sub-processor (11) other than the main processor (1) and storing the third piece of image data in a second memory (12) for the sub-processor (11), further comprising the following steps at the end time of suspend of the electronic device via the main processor (1):
- reading the first piece of image data from the non-volatile storage device (3), and restoring the software program in the OS memory area (21) based on the first piece of image data, when the hibernation mode has been the partial hibernation, or when the hibernation mode has been the full hibernation and data has not been stored in the second IO memory area (23), or reading the fourth piece of image data from the non-volatile storage device (3), and restoring the software program in the OS memory area (21) and data within the second IO memory area (23) based on the fourth piece of image data, when the hibernation mode has been the full hibernation and data has been stored in the second IO memory area (23);
- transferring the third piece of image data stored in the second memory (12) for the sub-processor (11) and restoring the specific data in the first IO memory area (24) based on the third piece of image data,
wherein the end time of suspend of the electronic device is the time upon or after resumption of the electronic device.

3. A non-transitory computer-readable recording medium having stored thereon a suspend control program that is executable by a main processor (1) of an electronic device, the suspend control program (4) comprising:
- a first program code that causes the main processor (1) to identify which of a full hibernation and a partial hibernation a hibernation mode is,
wherein:
when the hibernation mode is the partial hibernation, the suspend control program (4) comprises a second program code that causes the main processor (1) to:
- generate a first piece of image data on an OS memory area (21) of the first memory (2) in which a software program is stored; and
- store the generated first piece of image data to the non-volatile storage device (3), and
when the hibernation mode is the full hibernation, the suspend control program (4) comprises a third program code that causes the main processor (1) to:
- generate a fourth piece of image data on the OS memory area (21) and a second IO memory area (23) serving as an area of the first memory (2) other than a first IO memory area (24), when data that does not need to be saved is stored in the second IO memory area (23); and
- store and save the fourth piece of image data in and to the non-volatile storage device (3);
or
- generate the first piece of image data on an OS memory area (21) of the first memory (2), when data that does not need to be saved is not stored in the second IO memory area (23); and
- store and save the first piece of image data in and to the non-volatile storage device (3),
wherein the suspend control program (4) further comprises:
- a fourth program code that causes the main processor (1) to determine, whether or not specific data is stored in the first IO memory area (24) of the first memory (2), wherein the specific data includes data that is temporarily used, when the electronic device is operated, preferably font cache data or dictionary data for optical character recognition;
- a fifth program code that causes the main processor (1) to generate a third piece of image data on the first IO memory area (24), when the specific data is stored in the first IO memory area (24), wherein the third piece of image data includes data that needs to be saved at the time of suspend;
- a sixth program code that causes the main processor (1) to transfer the third piece of image data to the sub-processor (11) and store the third piece of image data in the second memory (12) for the sub-processor (11),
wherein at the end time of suspend of the electronic device, the suspend control program (4) comprises:
- a seventh program code that causes the main processor (1) to read the first piece of image data from the non-volatile storage device (3), and to restore the software program in the OS memory area (21) based on the first piece of image data, when the hibernation mode has been the partial hibernation, or when the hibernation mode has been the full hibernation and data has not been stored in the second IO memory area (23), or to read the fourth piece of image data from the non-volatile storage device (3), and to restore the software program in the OS memory area (21) and data within the second IO memory area (23) based on the fourth piece of image data, when the hibernation mode has been the full hibernation and data has been stored in the second IO memory area (23);
- a eighth program code that causes the main processor (1) to transfer the third piece of image data stored in the second memory (12) for the sub-processor (11) and restore the specific data in the first IO memory area (24) based on the third piece of image data,
wherein the end time of suspend of the electronic device is the time upon or after resumption of the electronic device.

## Patentansprüche

1. Elektronische Vorrichtung, aufweisend:
- einen ersten Speicher (2) mit einer Vielzahl von Speicherbereichen (21, 23, 24);
- einen Hauptprozessor (1);
- eine nichtflüchtige Speichervorrichtung (3);
- einen von dem Hauptprozessor (1) verschiedenen Unterprozessor (11); und
- einen zweiten Speicher (12), der mit dem Unterprozessor (11) verbunden ist;
wobei der Hauptprozessor (1) konfiguriert ist, um:
- zu identifizieren, welches von einem vollständigen Ruhezustand und einem teilweisen Ruhezustand ein Ruhezustandsmodus ist; wobei:
wenn der Ruhezustandsmodus der teilweise Ruhezustandsmodus ist, der Hauptprozessor (1) konfiguriert ist, um:
- ein erstes Stück von Bilddaten in einem OS (Betriebssystem)-Speicherbereich (21) des ersten Speichers (2), in dem ein Softwareprogramm gespeichert ist, zu erzeugen; und
- das erzeugte erste Stück von Bilddaten in der nichtflüchtigen Speichervorrichtung (3) zu speichern, und
wenn der Ruhezustandsmodus der vollständige Ruhezustandsmodus ist, der Hauptprozessor (1) konfiguriert ist zum:
- Erzeugen eines viertes Stücks von Bilddaten in dem OS-Speicherbereich (21) und einem zweiten IO (Eingang/Ausgang)-Speicherbereich (23), der als ein anderer Bereich des ersten Speichers (2) als ein erster IO-Speicherbereich (24) dient, wenn Daten, die nicht gesichert werden müssen, in dem zweiten IO-Speicherbereich (23) gespeichert werden; und
- Speichern und Sichern des vierten Stücks von Bilddaten in und auf der nichtflüchtigen Speichervorrichtung (3);
oder
- Erzeugen des ersten Stücks von Bilddaten in einem OS-Speicherbereich (21) des ersten Speichers (2), wenn Daten, die nicht gesichert werden müssen, nicht in dem zweiten IO-Speicherbereich (23) gespeichert werden; und
- Speichern und Sichern des ersten Stücks von Bilddaten in und auf der nichtflüchtigen Speichervorrichtung (3),
wobei der Hauptprozessor (1) dann konfiguriert ist, um:
- zu bestimmen, ob bestimmte Daten in dem ersten IO-Speicherbereich (24) des ersten Speichers (2) gespeichert sind oder nicht, wobei die bestimmten Daten Daten aufweisen, die temporär verwendet werden, wenn die elektronische Vorrichtung betrieben wird, vorzugsweise Schriftart-Cache-Daten oder Wörterbuchdaten für die optische Zeichenerkennung;
- ein drittes Stück von Bilddaten auf dem ersten IO-Speicherbereich (24) zu erzeugen, wenn die bestimmten Daten in dem ersten IO-Speicherbereich (24) gespeichert sind, wobei das dritte Stück von Bilddaten Daten enthält, die zum Zeitpunkt des Anhaltens gesichert werden müssen;
- Übertragen des dritten Stücks von Bilddaten an den Subprozessor (11) und Speichern des dritten Stücks von Bilddaten im zweiten Speicher (12) für den Subprozessor (11),
wobei zum Endzeitpunkt des Anhaltens der elektronischen Vorrichtung der Hauptprozessor (1) konfiguriert ist, um:
- das erste Stück von Bilddaten aus der nichtflüchtigen Speichervorrichtung (3) zu lesen und das Softwareprogramm in dem OS-Speicherbereich (21) basierend auf dem ersten Stück von Bilddaten wiederherzustellen, wenn der Ruhezustandsmodus der teilweise Ruhezustandsmodus gewesen ist, oder wenn der Ruhezustandsmodus der vollständige Ruhezustandsmodus gewesen ist und Daten nicht in dem zweiten IO-Speicherbereich (23) gespeichert worden sind, oder das vierte Stück von Bilddaten aus der nichtflüchtigen Speichervorrichtung (3) zu lesen und das Softwareprogramm im OS-Speicherbereich (21) und Daten innerhalb des zweiten IO-Speicherbereichs (23) basierend auf dem vierten Stück von Bilddaten wiederherzustellen, wenn der Ruhezustandsmodus der vollständige Ruhezustandsmodus war und Daten im zweiten IO-Speicherbereich (23) gespeichert wurden;
- das dritte Stück von Bilddaten, das in dem zweiten Speicher (12) für den Unterprozessor (11) gespeichert wurde, zu übertragen, und die bestimmten Daten in dem ersten IO-Speicherbereich (24) basierend auf dem dritten Stück von Bilddaten wiederherzustellen,
wobei die Endzeit des Anhaltens der elektronischen Vorrichtung die Zeit bei oder nach der Wiederaufnahme der elektronischen Vorrichtung ist.

2. Verfahren zur Steuerung des Anhaltens, das die folgenden Schritte aufweist:
- Identifizieren, welches von einem vollständigen Ruhezustand und einem teilweisen Ruhezustand ein Ruhezustandsmodus ist; wobei:
wenn der Ruhezustandsmodus der teilweise Ruhezustandsmodus ist:
- Erzeugen eines ersten Stücks von Bilddaten in einem OS-Speicherbereich (21) eines ersten Speichers (2), der von einem Hauptprozessor (1) verwendet wird, in dem ein Softwareprogramm gespeichert ist; und
- Speichern des erzeugten ersten Stücks von Bilddaten in einer nichtflüchtigen Speichervorrichtung (3), und
wenn der Ruhezustandsmodus der vollständige Ruhezustandsmodus ist:
- Erzeugen eines vierten Stücks von Bilddaten auf dem OS-Speicherbereich (21) und einem zweiten IO-Speicherbereich (23), der als ein anderer Bereich des ersten Speichers (2) als ein erster IO-Speicherbereich (24) dient, wenn Daten, die nicht gesichert werden müssen, in dem zweiten IO-Speicherbereich (23) gespeichert sind; und
- Speichern und Sichern des vierten Stücks von Bilddaten in und auf der nichtflüchtigen Speichervorrichtung (3);
oder
- Erzeugen der ersten Bilddaten in einem OS-Speicherbereich (21) des ersten Speichers (2), wenn Daten, die nicht gesichert werden müssen, nicht in dem zweiten IO-Speicherbereich (23) gespeichert sind; und
- Speichern und Sichern der ersten Bilddaten in und auf der nichtflüchtigen Speichervorrichtung (3);
- Bestimmen, ob bestimmte Daten in dem ersten IO-Speicherbereich (24) gespeichert sind oder nicht, über den Hauptprozessor (1), wobei die bestimmten Daten Daten aufweisen, die vorübergehend verwendet werden, wenn eine elektronische Vorrichtung betrieben wird, vorzugsweise Schriftart-Cache-Daten oder Wörterbuchdaten für die optische Zeichenerkennung;
- Erzeugen eines dritten Stücks von Bilddaten in dem ersten IO-Speicherbereich (24) über den Hauptprozessor (1), wenn die bestimmten Daten in dem ersten IO-Speicherbereich (24) gespeichert sind, wobei das dritte Stück von Bilddaten Daten enthält, die zum Zeitpunkt des Anhaltens gesichert werden müssen;
- Speichern des erzeugten ersten Stücks von Bilddaten in einer nichtflüchtigen Speichervorrichtung (3),
- Übertragen des dritten Stücks von Bilddaten an einen Unterprozessor (11), der nicht der Hauptprozessor (1) ist, und Speichern des dritten Stücks von Bilddaten in einem zweiten Speicher (12) für den Unterprozessor (11),
ferner aufweisend die folgenden Schritte am Endzeitpunkt des Anhaltens der elektronischen Vorrichtung über den Hauptprozessor (1):
- Lesen des ersten Stücks von Bilddaten aus der nichtflüchtigen Speichervorrichtung (3) und Wiederherstellen des Softwareprogramms in dem OS-Speicherbereich (21) basierend auf dem ersten Stück von Bilddaten, wenn der Ruhezustandsmodus der teilweise Ruhezustand gewesen ist, oder wenn der Ruhezustandsmodus der vollständige Ruhezustand gewesen ist und Daten nicht in dem zweiten IO-Speicherbereich (23) gespeichert worden sind, oder Lesen der vierten Bilddaten aus der nichtflüchtigen Speichervorrichtung (3) und Wiederherstellen des Softwareprogramms im OS-Speicherbereich (21) und der Daten im zweiten IO-Speicherbereich (23) auf der Grundlage der vierten Bilddaten, wenn der Ruhezustandsmodus der vollständige Ruhezustandszustand war und Daten im zweiten IO-Speicherbereich (23) gespeichert wurden;
- Übertragen des dritten Stücks von Bilddaten, das in dem zweiten Speicher (12) für den Subprozessor (11) gespeichert ist, und Wiederherstellen der spezifischen Daten in dem ersten IO-Speicherbereich (24) basierend auf dem dritten Stück von Bilddaten,
wobei die Endzeit des Anhaltens der elektronischen Vorrichtung die Zeit bei oder nach der Wiederaufnahme der elektronischen Vorrichtung ist.

3. Nichtflüchtiges computerlesbares Aufzeichnungsmedium, auf dem ein Anhalt-Steuerprogramm gespeichert ist, das durch einen Hauptprozessor (1) einer elektronischen Vorrichtung ausführbar ist, wobei das Anhalt-Steuerprogramm (4) aufweist
- einen ersten Programmcode, der den Hauptprozessor (1) veranlasst, zu identifizieren, welcher von einem vollständigen Ruhezustand und einem teilweisen Ruhezustand ein Ruhezustand ist,
wobei:
wenn der Ruhezustandsmodus der teilweise Ruhezustandsmodus ist, das Anhalt-Steuerprogramm (4) einen zweiten Programmcode aufweist, der den Hauptprozessor (1) dazu veranlasst
- ein erstes Stück von Bilddaten auf einem OS-Speicherbereich (21) des ersten Speichers (2) zu erzeugen, in dem ein Softwareprogramm gespeichert ist; und
- das erzeugte erste Stück von Bilddaten in der nichtflüchtigen Speichervorrichtung (3) zu speichern, und
wenn der Ruhezustandsmodus der vollständige Ruhezustandsmodus ist, das Anhalt-Steuerprogramm (4) einen dritten Programmcode aufweist, der den Hauptprozessor (1) veranlasst zum
- Erzeugen eines vierten Stücks von Bilddaten auf dem OS-Speicherbereich (21) und einem zweiten IO-Speicherbereich (23), der als ein anderer Bereich des ersten Speichers (2) als ein erster IO-Speicherbereich (24) dient, wenn Daten, die nicht gesichert werden müssen, in dem zweiten IO-Speicherbereich (23) gespeichert sind; und
- Speichern und Sichern des vierten Stücks von Bilddaten in und auf der nichtflüchtigen Speichervorrichtung (3);
oder
- Erzeugen des ersten Stücks von Bilddaten in einem OS-Speicherbereich (21) des ersten Speichers (2), wenn Daten, die nicht gesichert werden müssen, nicht in dem zweiten IO-Speicherbereich (23) gespeichert sind; und
- Speichern und Sichern des ersten Stücks von Bilddaten in und auf der nichtflüchtigen Speichervorrichtung (3),
wobei das Anhalt-Steuerprogramm (4) ferner aufweist
- einen vierten Programmcode, der den Hauptprozessor (1) veranlasst, zu bestimmen, ob bestimmte Daten in dem ersten IO-Speicherbereich (24) des ersten Speichers (2) gespeichert sind oder nicht, wobei die bestimmten Daten Daten enthalten, die temporär verwendet werden, wenn die elektronische Vorrichtung betrieben wird, vorzugsweise Schriftart-Cache-Daten oder Wörterbuchdaten für die optische Zeichenerkennung;
- einen fünften Programmcode, der den Hauptprozessor (1) veranlasst, ein drittes Stück von Bilddaten auf dem ersten IO-Speicherbereich (24) zu erzeugen, wenn die bestimmten Daten in dem ersten IO-Speicherbereich (24) gespeichert sind, wobei das dritte Stück von Bilddaten Daten enthält, die zum Zeitpunkt des Anhaltens gesichert werden müssen;
- einen sechsten Programmcode, der den Hauptprozessor (1) veranlasst, das dritte Stück von Bilddaten an den Subprozessor (11) zu übertragen und das dritte Stück von Bilddaten in dem zweiten Speicher (12) für den Subprozessor (11) zu speichern,
wobei zum Endzeitpunkt des Anhaltens der elektronischen Vorrichtung das Anhalt-Steuerprogramm (4) aufweist
- einen siebten Programmcode, der den Hauptprozessor (1) veranlasst, das erste Stück von Bilddaten aus der nichtflüchtigen Speichervorrichtung (3) zu lesen und das Softwareprogramm in dem OS-Speicherbereich (21) basierend auf dem ersten Stück von Bilddaten wiederherzustellen, wenn der Ruhezustandsmodus der teilweise Ruhezustandsmodus gewesen ist, oder wenn der Ruhezustandsmodus der vollständige Ruhezustandsmodus gewesen ist und Daten nicht in dem zweiten IO-Speicherbereich (23) gespeichert worden sind, oder das vierte Stück von Bilddaten aus der nichtflüchtigen Speichervorrichtung (3) zu lesen, und das Softwareprogramm in dem OS-Speicherbereich (21) und Daten innerhalb des zweiten IO-Speicherbereichs (23) basierend auf dem vierten Stück von Bilddaten wiederherzustellen, wenn der Ruhezustandsmodus der vollständige Ruhezustand war und Daten in dem zweiten IO-Speicherbereich (23) gespeichert wurden;
- einen achten Programmcode, der den Hauptprozessor (1) veranlasst, das im zweiten Speicher (12) gespeicherte dritte Stück von Bilddaten für den Unterprozessor (11) zu übertragen und die bestimmten Daten im ersten IO-Speicherbereich (24) auf der Grundlage der dritten Bilddaten wiederherzustellen,
wobei die Endzeit des Anhaltens der elektronischen Vorrichtung die Zeit bei oder nach der Wiederaufnahme der elektronischen Vorrichtung ist.

## Revendications

1. Dispositif électronique, comprenant :
- une première mémoire (2) incluant une pluralité de zones de mémoire (21, 23, 24) ;
- un processeur principal (1) ;
- un dispositif de stockage non volatil (3) ;
- un sous-processeur (11) autre que le processeur principal (1) ; et
- une deuxième mémoire (12) connectée au sous-processeur (11) ;
dans lequel le processeur principal (1) est configuré pour :
- identifier quel est un mode d'hibernation parmi une hibernation complète et une hibernation partielle ; dans lequel :
lorsque le mode d'hibernation est l'hibernation partielle, le processeur principal (1) est configuré pour :
- générer un premier élément de données d'image sur une zone de mémoire OS (21) de la première mémoire (2) dans laquelle un programme logiciel est stocké ; et
- stocker le premier élément de données d'image généré sur le dispositif de stockage non volatil (3), et
lorsque le mode d'hibernation est l'hibernation complète, le processeur principal (1) est configuré pour :
- générer un quatrième élément de données d'image sur la zone de mémoire OS (21) et une deuxième zone de mémoire IO (23) servant de zone de la première mémoire (2) autre qu'une première zone de mémoire IO (24), lorsque des données qui n'ont pas besoin d'être sauvegardées sont stockées dans la deuxième zone de mémoire IO (23) ; et
- stocker et sauvegarder le quatrième élément de données d'image dans et sur le dispositif de stockage non volatil (3) ;
ou
- générer le premier élément de données d'image sur une zone de mémoire OS (21) de la première mémoire (2), lorsque des données qui n'ont pas besoin d'être sauvegardées ne sont pas stockées dans la deuxième zone de mémoire IO (23) ; et
- stocker et sauvegarder le premier élément de données d'image dans et sur le dispositif de stockage non volatil (3),
dans lequel le processeur principal (1) est ensuite configuré pour :
- déterminer si des données spécifiques sont stockées ou non dans la première zone de mémoire IO (24) de la première mémoire (2), dans lequel les données spécifiques incluent des données qui sont temporairement utilisées lorsque le dispositif électronique est utilisé, de préférence des données de cache de police de caractères ou des données de dictionnaire pour la reconnaissance optique de caractères ;
- générer un troisième élément de données d'image sur la première zone de mémoire IO (24) lorsque les données spécifiques sont stockées dans la première zone de mémoire IO (24), dans lequel le troisième élément de données d'image inclut des données qui ont besoin d'être sauvegardées au moment de la suspension ;
- transférer le troisième élément de données d'image au sous-processeur (11) et stocker le troisième élément de données d'image dans la deuxième mémoire (12) pour le sous-processeur (11),
dans lequel, au moment de fin de la suspension du dispositif électronique, le processeur principal (1) est configuré pour :
- lire le premier élément de données d'image à partir du dispositif de stockage non volatil (3) et restaurer le programme logiciel dans la zone de mémoire OS (21) sur la base du premier élément de données d'image, lorsque le mode d'hibernation a été l'hibernation partielle ou lorsque le mode d'hibernation a été l'hibernation complète et que des données n'ont pas été stockées dans la deuxième zone de mémoire IO (23), ou lire le quatrième élément de données d'image à partir du dispositif de stockage non volatil (3) et restaurer le programme logiciel dans la zone de mémoire OS (21) et les données dans la deuxième zone de mémoire IO (23) sur la base du quatrième élément de données d'image, lorsque le mode d'hibernation a été l'hibernation complète et que des données ont été stockées dans la deuxième zone de mémoire IO (23) ;
- transférer le troisième élément de données d'image stocké dans la deuxième mémoire (12) pour le sous-processeur (11) et restaurer les données spécifiques dans la première zone de mémoire IO (24) sur la base du troisième élément de données d'image,
dans lequel le moment de fin de suspension du dispositif électronique est le moment auquel ou après lequel a lieu la reprise du dispositif électronique.

2. Procédé de commande de suspension, comprenant les étapes consistant à:
- identifier quel est un mode d'hibernation parmi une hibernation complète et une hibernation partielle ; dans lequel :
lorsque le mode d'hibernation est l'hibernation partielle :
- générer un premier élément de données d'image sur une zone de mémoire OS (21) d'une première mémoire (2) utilisée par un processeur principal (1) dans lequel un programme logiciel est stocké ; et
- stocker le premier élément de données d'image généré sur un dispositif de stockage non volatil (3), et
lorsque le mode d'hibernation est l'hibernation complète :
- générer un quatrième élément de données d'image sur la zone de mémoire OS (21) et une deuxième zone de mémoire IO (23) servant de zone de la première mémoire (2) autre qu'une première zone de mémoire IO (24), lorsque des données qui n'ont pas besoin d'être sauvegardées sont stockées dans la deuxième zone de mémoire IO (23) ; et
- stocker et sauvegarder le quatrième élément de données d'image dans et sur le dispositif de stockage non volatil (3) ;
ou
- générer le premier élément de données d'image sur une zone de mémoire OS (21) de la première mémoire (2), lorsque des données qui n'ont pas besoin d'être sauvegardées ne sont pas stockées dans la deuxième zone de mémoire IO (23) ; et
- stocker et sauvegarder le premier élément de données d'image dans et sur le dispositif de stockage non volatil (3) ;
- déterminer si des données spécifiques sont stockées ou non dans la première zone de mémoire IO (24), via le processeur principal (1), dans lequel les données spécifiques incluent des données qui sont temporairement utilisées lorsqu'un dispositif électronique est utilisé, de préférence des données de cache de police de caractères ou des données de dictionnaire pour la reconnaissance optique de caractères ;
- générer un troisième élément de données d'image sur la première zone de mémoire IO (24) via le processeur principal (1), lorsque les données spécifiques sont stockées dans la première zone de mémoire IO (24), dans lequel le troisième élément de données d'image inclut des données qui ont besoin d'être sauvegardées au moment de la suspension ;
- stocker le premier élément de données d'image généré dans un dispositif de stockage non volatil (3),
- transférer le troisième élément de données d'image à un sous-processeur (11) autre que le processeur principal (1) et stocker le troisième élément de données d'image dans une deuxième mémoire (12) pour le sous-processeur (11),
comprenant en outre les étapes suivantes au moment de fin de la suspension du dispositif électronique via le processeur principal (1) :
- lire le premier élément de données d'image à partir du dispositif de stockage non volatil (3) et restaurer le programme logiciel dans la zone de mémoire OS (21) sur la base du premier élément de données d'image, lorsque le mode d'hibernation a été l'hibernation partielle ou lorsque le mode d'hibernation a été l'hibernation complète et que des données n'ont pas été stockées dans la deuxième zone de mémoire IO (23), ou lire le quatrième élément de données d'image à partir du dispositif de stockage non volatil (3) et restaurer le programme logiciel dans la zone de mémoire OS (21) et les données dans la deuxième zone de mémoire IO (23) sur la base du quatrième élément de données d'image, lorsque le mode d'hibernation a été l'hibernation complète et que des données ont été stockées dans la deuxième zone de mémoire IO (23) ;
- transférer le troisième élément de données d'image stocké dans la deuxième mémoire (12) pour le sous-processeur (11) et restaurer les données spécifiques dans la première zone de mémoire IO (24) sur la base du troisième élément de données d'image,
dans lequel le moment de fin de suspension du dispositif électronique est le moment auquel ou après lequel a lieu la reprise du dispositif électronique.

3. Support d'enregistrement lisible par ordinateur non transitoire sur lequel est stocké un programme de commande de suspension qui est exécutable par un processeur principal (1) d'un dispositif électronique, le programme de commande de suspension (4) comprenant :
- un premier code de programme qui amène le processeur principal (1) à identifier quel est un mode d'hibernation parmi une hibernation complète et une hibernation partielle,
dans lequel :
lorsque le mode d'hibernation est l'hibernation partielle, le programme de commande de suspension (4) comprend un deuxième code de programme qui amène le processeur principal (1) à :
- générer un premier élément de données d'image sur une zone de mémoire OS (21) de la première mémoire (2) dans laquelle un programme logiciel est stocké ; et
- stocker le premier élément de données d'image généré sur le dispositif de stockage non volatil (3), et
lorsque le mode d'hibernation est l'hibernation complète, le programme de commande de suspension (4) comprend un troisième code de programme qui amène le processeur principal (1) à :
- générer un quatrième élément de données d'image sur la zone de mémoire OS (21) et une deuxième zone de mémoire IO (23) servant de zone de la première mémoire (2) autre qu'une première zone de mémoire IO (24), lorsque des données qui n'ont pas besoin d'être sauvegardées sont stockées dans la deuxième zone de mémoire IO (23) ; et
- stocker et sauvegarder le quatrième élément de données d'image dans et sur le dispositif de stockage non volatil (3) ;
ou
- générer le premier élément de données d'image sur une zone de mémoire OS (21) de la première mémoire (2), lorsque des données qui n'ont pas besoin d'être sauvegardées ne sont pas stockées dans la deuxième zone de mémoire IO (23) ; et
- stocker et sauvegarder le premier élément de données d'image dans et sur le dispositif de stockage non volatil (3) ;
dans lequel le programme de commande de suspension (4) comprend en outre :
- un quatrième code de programme qui amène le processeur principal (1) à déterminer si des données spécifiques sont stockées ou non dans la première zone de mémoire IO (24) de la première mémoire (2), dans lequel les données spécifiques incluent des données qui sont temporairement utilisées lorsque le dispositif électronique est utilisé, de préférence des données de cache de police de caractères ou des données de dictionnaire pour la reconnaissance optique de caractères ;
- un cinquième code de programme qui amène le processeur principal (1) à générer un troisième élément de données d'image sur la première zone de mémoire IO (24) lorsque les données spécifiques sont stockées dans la première zone de mémoire IO (24), dans lequel le troisième élément de données d'image inclut des données qui ont besoin d'être sauvegardées au moment de la suspension ;
- un sixième code de programme qui amène le processeur principal (1) à transférer le troisième élément de données d'image au sous-processeur (11) et à stocker le troisième élément de données d'image dans la deuxième mémoire (12) pour le sous-processeur (11),
dans lequel, au moment de fin de la suspension du dispositif électronique, le programme de commande de suspension (4) comprend :
- un septième code de programme qui amène le processeur principal (1) à lire le premier élément de données d'image à partir du dispositif de stockage non volatil (3) et à restaurer le programme logiciel dans la zone de mémoire OS (21) sur la base du premier élément de données d'image, lorsque le mode d'hibernation a été l'hibernation partielle ou lorsque le mode d'hibernation a été l'hibernation complète et que des données n'ont pas été stockées dans la deuxième zone de mémoire IO (23), ou à lire le quatrième élément de données d'image à partir du dispositif de stockage non volatil (3) et à restaurer le programme logiciel dans la zone de mémoire OS (21) et les données dans la deuxième zone de mémoire IO (23) sur la base du quatrième élément de données d'image, lorsque le mode d'hibernation a été l'hibernation complète et que des données ont été stockées dans la deuxième zone de mémoire IO (23) ;
- un huitième code de programme qui amène le processeur principal (1) à transférer le troisième élément de données d'image stocké dans la deuxième mémoire (12) pour le sous-processeur (11) et à restaurer les données spécifiques dans la première zone de mémoire d'E/S (24) sur la base du troisième élément de données d'image,
dans lequel le moment de fin de suspension du dispositif électronique est le moment auquel ou après lequel a lieu la reprise du dispositif électronique.
